# EUROPÄISCHE PATENTSCHRIFT

(11) **EP 2 661 459 B1**
(45) Veröffentlichungstag und Bekanntmachung des Hinweises auf die Patenterteilung: **08.06.2016**
(21) Anmeldenummer: 11796946.9
(22) Anmeldetag: 01.12.2011
(51) Int. Cl.: C08J 5/24

(54) **COMPOSITE-HALBZEUGE UND DARAUS HERGESTELLTE FORMTEILE SOWIE DIREKT HERGESTELLTE FORMTEILE AUF BASIS VON HYDROXYFUNKTIONALISIERTEN (METH) ACRYLATEN, DIE MITTELS URETDIONEN DUROPLASTISCH VERNETZT WERDEN**
SEMIFINISHED COMPOSITES AND FORMS THEREOF AND DIRECTLY PRODUCED FORMS BASED ON HYDROXYL-FUNCTIONALISED (METH)ACRYLATES, WHICH ARE CURED WITH THERMOSETTING URETDIONS
COMPOSITES SEMIFINIS ET PRODUITS FORMÉS À PARTIR DE CEUX-CI AINSI QUE DES PRODUITS FORMÉS OBTENUS DIRECTEMENT À BASE DE METH)ACRYLATES À FONCTION HYDROXYLE RÉTICULÉS AVEC DES URETDIONES THERMODURCISSABLES

(30) Priorität: 04.01.2011 DE 102011002418
(43) Veröffentlichungstag der Anmeldung: 13.11.2013
(73) Patentinhaber: Evonik Degussa GmbH, 45128 Essen (DE)
(72) Erfinder: SCHMITT, Günter, 64291 Darmstadt (DE); REEMERS, Sandra, 48151 Münster (DE); SPYROU, Emmanouil, 46514 Schermbeck (DE); HEEB, Heike, 63526 Erlensee (DE); KOHLSTRUK, Stephan, 48249 Dülmen (DE); SCHMIDT, Friedrich Georg, 45721 Haltern am See (DE); GOLLAN, Elke, 44653 Herne (DE)
(86) Internationale Anmeldenummer: PCT/EP2011/071450
(87) Internationale Veröffentlichungsnummer: WO 2012/093006

(56) Entgegenhaltungen:
- WO-A1-2010/108701
- WO-A1-2010/108723
- WO-A1-2011/147688
- DE-A1- 4 441 765

## Beschreibung

### Gebiet der Erfindung

Die Erfindung betrifft ein Verfahren zur Herstellung von lagerstabilen Polyurethan-Prepregs und daraus hergestellte Formkörper (Composite-Bauteile). Zur Herstellung der Prepregs bzw. Bauteile mischt man (Meth)acrylatmonomere, (Meth)acrylatpolymere, hydroxyfunktionalisierte (Meth)acrylatmonomere und/oder hydroxyfunktionalisierte (Meth)acrylatpolymere mit Uretdion-Materialien und weiterhin mit, eine radikalische Polymerisation beschleunigenden, aromatischen Aminen. Diese Mischung oder Lösung wird nach bekannten Verfahren auf Fasermaterial, wie z.B. Carbonfasern, Glasfasern oder Polymerfasern aufgebracht und mit Hilfe von Initiatoren, wie z.B. di-Benzoylperoxyd bei Raumtemperatur oder bei höheren Temperaturen polymerisiert. Anstelle einer Aminbeschleunigung und nachfolgender Aushärtung mit Initiatoren können auch andere bekannte Raumtemperatur-Härtungssysteme, wie z.B. Permaleinatsysteme, zur Anwendung kommen.

Nach Polymerisation, z.B. bei Raumtemperatur oder bei bis zu 80 °C, entstehen Thermoplaste bzw. thermoplastische Prepregs, die nachträglich noch verformt werden können. Die hydroxyfunktionalisierten Acrylatbestandteile können anschließend mit den bereits im System vorhandenen Uretdionen durch erhöhte Temperatur vernetzt werden. Auf diese Weise können formstabile Duroplaste bzw. vernetzte Composite-Bauteile erzeugt werden.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-lay-up Technologie eingesetzt.

Industrielle Anwender solcher Systeme verlangen neben schnelleren Zykluszeiten und höheren Lagerstabilitäten - auch bei Raumtemperatur - zusätzlich eine Möglichkeit, die Prepregs zuzuschneiden, ohne dass bei automatisiertem Zuschnitt und Lay-up der einzelnen Prepreg-Lagen, die Schneidwerkzeuge mit der häufig klebrigen Matrixmaterial verunreinigt werden.

Verschiedene Formgebungsprozesse, wie z. B. das Reaction-Transfer-Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Formgeometrien angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

### Stand der Technik

Neben Polyestern, Vinylestern und Epoxy-Systemen gibt es eine Reihe spezialisierter Harze im Bereich der vernetzenden Matrix-Systeme. Dazu zählen auch PolyurethanHarze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt. Jedoch auch die Toxizität von Epoxy-Systemen und den dort verwendeten Härter-Komponenten ist als kritisch anzusehen. Dies gilt insbesondere für bekannte Sensibilisierungen und Allergien.

Prepregs und daraus hergestellte Composites auf der Basis von Epoxy-Systemen werden zum Beispiel beschrieben in WO 98/50211, EP 309 221, EP 297 674, WO 89/04335 und US 4,377,657. In WO 2006/043019 wird ein Verfahren zur Herstellung von Prepregs auf der Basis von Epoxidharz-Polyurethanpulvern beschrieben. Des Weiteren sind Prepregs auf der Basis von pulverförmigen Thermoplasten als Matrix bekannt.

In WO 99/64216 werden Prepregs und Composite sowie eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0590702 werden Pulverimprägnierungen zur Herstellung von Prepregs beschrieben, bei denen das Pulver aus einem Gemisch aus einem Thermoplasten und einem reaktiven Monomer bzw. Prepolymeren besteht. Die WO 2005/091715 beschreibt ebenfalls die Verwendung von Thermoplasten zur Herstellung von Prepregs.

Prepregs mit einer Matrix auf der Basis von 2-Komponenten-Polyurethanen (2-K-PUR) sind gleichfalls bekannt. Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat, wie z.B. polymere Methylendiphenyldiisocyanate (MDI) ist, sind dies bei der zweiten Komponente Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyaddition unter Bildung eines Netzwerkes aus Polyurethan bzw. Polyharnstoff. 2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [siehe dazu: Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil.

Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.

In DE 102009001793.3 und DE 102009001806.9 wird ein Verfahren zur Herstellung von lagerstabilen Prepregs, im Wesentlichen aufgebaut aus A) mindestens einem Faser förmigen Träger und B) mindestens einer reaktiven pulverförmigen Polyurethanzusammensetzung als Matrixmaterial beschrieben.
Die Systeme können dabei auch Poly(meth)acrylate als Cobindemittel oder Polyolkomponente aufweisen. In DE 102010029355.5 werden solche Zusammensetzungen durch ein Direktschmelzeimprägnierverfahren in das Fasermaterial verbracht. In DE 102010030234.1 durch eine Vorbehandlung mit Lösungsmitteln. Nachteil dieser Systeme ist die hohe Schmelzviskosität bzw. die Verwendung von Lösungsmitteln, die zwischenzeitlich entfernt werden müssen, bzw. auch in toxikologischer Hinsicht Nachteile mit sich bringen können.

### Aufgabe

Die Aufgabe der vorliegenden Erfindung vor dem Hintergrund des Standes der Technik war es, eine neue Prepreg-Technologie zur Verfügung zu stellen, die ein einfacheres Verfahren zur Herstellung von problemlos zu handhabenden, das heißt nicht toxischen, Prepreg-Systemen ermöglicht.

Insbesondere war es Aufgabe der vorliegenden Erfindung, ein Verfahren zur Herstellung von Prepregs zur Verfügung zu stellen, welches eine gegenüber dem Stand der Technik deutlich verlängerte Lagerstabilität und/oder Verarbeitungszeit (Standzeit, Potlife) ermöglicht. Zudem soll das Handling der Prepregs gegenüber dem Stand der Technik verbessert oder zumindest vergleichbar sein.

Für die Herstellung der Prepregs wäre es vorteilhaft, wenn die Viskosität von Zubereitungen der unvernetzten Matrixmaterialien gering genug ist, um bei der Herstellung des Composite-Bauteils eine Benetzung des Faser förmigen Trägers mit ausreichendem Faservolumenanteil zu gewährleisten, wobei auch eine Thixotropie vorteilhaft sein kann, damit ein Abfließen des Harzes in senkrechten Bauteilsegmenten verhindert werden kann.

### Lösung

Gelöst wurden die Aufgaben mittels einer neuartigen Kombination aus (Meth)acrylatharzen mit Uretdionen. Der Vorteil dieses erfindungsgemäßen Systems liegt in der Herstellung eines verformbaren thermoplastischen Halbzeugs/Prepregs, das bei der Herstellung der Composite-Bauteile in einem weiteren Schritt duroplastisch vernetzt wird. Die Ausgangsformulierung ist flüssig und damit ohne Zugabe von Lösungsmitteln für die Imprägnierung von Fasermaterial geeignet. Die Halbzeuge sind lagerstabil bei Raumtemperatur. Die entstehenden Formteile verfügen über eine, im Vergleich zu anderen Polyurethansystemen, erhöhte Wärmeformbeständigkeit. Im Vergleich zu gängigen Epoxysystemen zeichnen sie sich durch eine höhere Flexibilität aus. Zudem können derartige Matrices lichtstabil ausgelegt werden und damit für die Herstellung von Sichtcarbonteilen ohne weitere Lackierung verwendet werden.

Überraschend wurde gefunden, dass ausreichend imprägnierte, reaktive und lagerstabile Composite-Halbzeuge hergestellt werden können, indem man diese mit der oben genannten Kombination aus einem (Meth)acrylatreaktionsharz und einer Isocyanatkomponente herstellt.
Man erhält so Composite-Halbzeuge mit gegenüber dem Stand der Technik zumindest gleichen aber auch verbesserten Verarbeitungseigenschaften, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß verwendbaren reaktiven Zusammensetzungen sind umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Der Begriff Composite-Halbzeuge wird im Rahmen dieser Erfindung synonym zu den Begriffen Prepreg und Organoblech verwendet. Bei einem Prepreg handelt es sich in der Regel um eine Vorstufe für duroplastische Composite-Bauteile. Bei einem Organoblech handelt es sich normalerweise um eine entsprechende Vorstufe für thermoplastische Composite-Bauteile.

Insbesondere werden die Aufgaben gelöst durch neuartige Composite-Halbzeuge, die im Wesentlichen aus
A) mindestens einem Faser förmigen Träger und
B) mindestens einer reaktiven oder hochreaktiven Polymerzusammensetzung als Matrixmaterial
aufgebaut sind. Dabei setzt sich die Polymerzusammensetzung im Wesentlichen aus einer Hydroxy-, Amin- und/oder Thiolgruppen aufweisenden Harzkomponente 1 auf (Meth)acrylatbasis, einer Initiator oder Beschleuniger enthaltenden Harzkomponente 2 und einer Isocyanatkomponente, enthaltend intern blockierte und/oder mit Blockierungsmitteln blockierte Di- oder Polyisocyanate, zusammen. Die Harzkomponente 1 enthält dabei 20 bis 70 Gew% (Meth)acrylat-Monomere und 10 Gew% bis 50 Gew% Präpolymere.

Insbesonders bevorzugt liegt das Mengenverhältnis von Harzkomponente 1 zur Isocyanatkomponente zwischen 90 zu 10 und 50 zu 50.

Ganz besonders bevorzugt liegen die Harzkomponente 1 und die Isocyanatkomponente in einem solchen Verhältnis zueinander vor, dass auf jede Hydroxylgruppe der Harzkomponente 1 0,3 bis 1,0, bevorzugt 0,6 bis 0,9, besonders bevorzugt 0,45 bis 0,55 Uretdiongruppen und/oder extern blockierte Isocyanatgruppen der Isocyanatomponente entfallen.

Bezüglich Harzkomponenten 1 und 2 gibt es zwei unterschiedliche Ausführungsformen. In der ersten Ausführungsform ist Harzkomponente 1 mindestens zusammengesetzt aus
0 Gew% bis 30 Gew% Vernetzer,
30 Gew% bis 60 Gew% (Meth)acrylat-Monomere,
1 Gew% bis 40 Gew% bevorzugt 5 bis 40 Gew%, besonders bevorzugt 10 bis 40 Gew% Präpolymere,
0 Gew% bis 5 Gew% Beschleuniger und
gegebenenfalls weitere Hilfsstoffe.

Gleichzeitig enthält Harzkomponente 2 - bezogen auf die Mengen der Harzkomponente 1 - 0,5 bis 7,0 Gew% Initiator, bevorzugt ein Peroxid.

In der zweiten Ausführungsform ist Harzkomponente 1 mindestens zusammengesetzt aus
0 Gew% bis 30 Gew% Vernetzer,
30 Gew% bis 60 Gew% (Meth)acrylat-Monomere,
1 bis 40 Gew%, bevorzugt 5 bis 40 Gew%, besonders bevorzugt 10 bis 40 Gew% Präpolymere,
0,5 bis 7,0 Gew% Initiator, bevorzugt ein Peroxid und
gegebenenfalls weitere Hilfsstoffe.

Gleichzeitig enthält Harzkomponente 2 in dieser Ausführungsform - bezogen auf die Mengen der Harzkomponente 1 - 0,1 Gew% bis 5 Gew% Beschleuniger.
In beiden Ausführungsformen handelt es sich bei dem Initiator bevorzugt um Dilauroylperoxid, Permaleinate und/oder Dibenzoylperoxid und bei dem Beschleuniger um ein tertiäres, aromatisch substituiertes Amin.

Optional können in der Harzkomponente 1 zusätzlich 0 Gew% bis 20 Gew%, bevorzugt bis 15 Gew% Urethan(meth)acrylate enthalten sein.

Die erfindungsgemäß eingesetzten Polymerzusammensetzungen bieten einen sehr guten Verlauf bei geringer Viskosität und damit eine gute Imprägnierfähigkeit und im ausgehärteten Zustand eine ausgezeichnete Chemikalienbeständigkeit. Bei Verwendung von aliphatischen Vernetzern (z.B. IPDI oder H₁₂MDI) und durch die erfindungsgemäße Verwendung der funktionalisierten Poly(meth)acrylate wird zusätzlich noch eine gute Witterungsbeständigkeit erreicht.

Die erfindungsgemäßen Composite-Halbzeuge sind weiterhin bei Raumtemperatur-Bedingungen sehr lagerstabil, in der Regel mehrere Wochen und sogar Monate. Sie können somit jederzeit zu Composite-Bauteilen weiterverarbeitet werden. Dies ist der wesentliche Unterschied zu den Systemen nach Stand der Technik, die reaktiv und nicht lagerstabil sind, da diese nach dem Aufbringen sofort beginnen z.B. zu Polyurethanen zu reagieren und somit zu vernetzen.

Danach können die lagerfähigen Composite-Halbzeuge zu einem späteren Zeitpunkt zu Composite-Bauteilen weiterverarbeitet werden. Durch Verwendung der erfindungsgemäßen Composite-Halbzeuge erfolgt eine sehr gute Imprägnierung des Faser förmigen Trägers, dadurch bedingt, dass die flüssigen Harzkomponenten, enthaltend die Isocyanatkomponente, die Faser des Trägers sehr gut benetzen, wobei die zu einer beginnenden zweite Vernetzungsreaktion führen könnende thermische Belastung der Polymerzusammensetzung durch eine vorherige Homogenisierung der Polymerzusammensetzung vermieden wird, des weiteren fallen die Prozessschritte der Vermahlung und Siebung in einzelne Partikelgrößenfraktionen weg, sodass eine höhere Ausbeute an imprägniertem Faser förmigen Träger erzielt werden kann.

Ein weiterer großer Vorteil der erfindungsgemäßen Composite-Halbzeuge ist, dass die hohen Temperaturen, wie sie beim Schmelzimprägnierverfahren oder bei der Ansinterung von pulverförmigen reaktiven Polyurethanzusammensetzungen zumindest kurzzeitig vonnöten sind, bei diesem erfindungsgemäßen Verfahren nicht erforderlich sind.

### Verfahren

Gegenstand der Erfindung ist neben den Composite-Halbzeugen oder Prepregs auch ein Verfahren zur Herstellung dieser Composite-Halbzeuge bzw. Prepregs und deren Weiterverarbeitung zu Formteilen bzw. Composite-Bauteilen.
Dieses Verfahren setzt sich aus folgenden Verfahrensschritten zusammen:
I. Herstellung einer reaktiven Zusammensetzung enthaltend die Harzkomponenten 1 und 2 und die Isocyanatkomponente, jeweils gemäß noch folgender Beschreibung,
II. direkte Imprägnierung des Faser förmigen Träger gemäß noch folgender Beschreibung mit der Zusammensetzung aus I.,
III. Aushärten der Harzkomponenten,
IV. Formgebung zum späteren Formteil und
V. Aushärten der Isocyanatkomponente.

Verfahrensschritt I kann beispielsweise durch einfaches Zusammenrühren der drei Komponenten erfolgen. Nach dem Zusammenführen der Harzkomponenten 1 und 2, sollten diese innerhalb von 45 min, bevorzugt innerhalb von 30 min und besonders bevorzugt innerhalb von 15 min in Verfahrensschritt II. weiterverarbeitet werden.

Verfahrensschritt II, die Imprägnierung, erfolgt durch Tränkung der Fasern, Gewebe oder Gelege mit der in Verfahrensschritt 1 hergestellten Formulierung. Bevorzugt erfolgt die Imprägnierung bei Raumtemperatur.

Verfahrensschritt III. erfolgt direkt nach Verfahrensschritt II. Das Aushärten kann durch Temperaturerhöhung auf bis zu 80 °C beschleunigt werden. Dabei ist darauf zu achten, dass die Temperatur unterhalb der für Verfahrensschritt V benötigten Temperatur liegt.

Die erfindungsgemäß hergestellten Composite-Halbzeuge / Prepregs weisen nach Verfahrensschritt III bzw. IV eine sehr hohe Lagerstabilität bei Raumtemperatur auf. Diese beträgt je nach enthaltener reaktiver Polyurethanzusammensetzung mindestens einige Tage bei Raumtemperatur. In der Regel sind die Composite-Halbzeuge mehrere Wochen bei 40 °C und darunter, sowie bei Raumtemperatur auch mehrere Jahre lagerstabil. Die so hergestellten Prepregs sind nicht klebrig und daher sehr gut zu handhaben und weiter zu verarbeiten. Die erfindungsgemäß eingesetzten reaktiven oder hochreaktiven Polyurethanzusammensetzungen weisen demnach eine sehr gute Haftung und Verteilung auf dem faserförmigen Träger auf.

In Verfahrensschritt IV. können die so hergestellten Composite-Halbzeuge / Prepregs je nach Bedarf zu unterschiedlichen Formen kombiniert und zugeschnitten werden. Insbesondere werden zur Konsolidierung mehrerer Composite-Halbzeuge zu einem einzigen Composite und vor endgültiger Vernetzung des Matrixmaterials zur Matrix zugeschnitten, gegebenenfalls vernäht oder anderweitig fixiert.

In Verfahrensschritt V. erfolgt die endgültige Aushärtung der Composite-Halbzeuge zu Formteilen, die duroplastisch vernetzt sind. Dies erfolgt durch eine thermische Aushärtung der Hydroxygruppen der Harzkomponente 1 mit der Isocyanatkomponente.
Im Rahmen dieser Erfindung erfolgt dieser Vorgang der Herstellung der Composite-Bauteile aus den Prepregs je nach Aushärtungszeit bei Temperaturen von oberhalb etwa 160 °C bei Einsatz von reaktiven Matrixmaterialien (Variante I), oder bei mit entsprechenden Katalysatoren versehenen hochreaktiven Matrixmaterialien (Variante II) bei Temperaturen von über 100 °C.
In Verfahrensschritt V können die Composite-Halbzeuge in einer geeigneten Form unter Druck und gegebenenfalls Anlegen von Vakuum verpresst werden.

Die erfindungsgemäß eingesetzten reaktiven Polyurethanzusammensetzungen werden bei normalen Bedingungen, z.B. mit DBTL-Katalyse, ab 160 °C, üblicherweise ab ca. 180 °C ausgehärtet. Die erfindungsgemäß eingesetzten reaktiven Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H12MDI) wird zusätzlich noch eine gute Witterungsbeständigkeit erreicht.

Mit Hilfe der erfindungsgemäß eingesetzten hochreaktiven und somit bei Niedrigtemperatur härtenden Isocyanatkomponente kann bei 100 bis 160 °C Aushärtungstemperatur nicht nur Energie und Aushärtungszeit gespart werden, sondern es lassen sich auch viele Temperatur sensible Träger verwenden.

Hochreaktiv (Variante II) bedeutet im Rahmen dieser Erfindung, dass die erfindungsgemäß eingesetzten Uretdiongruppen haltigen Polyurethanzusammensetzungen bei Temperaturen von 100 bis 160 °C, und zwar je nach Art des Trägers aushärten. Bevorzugt beträgt diese Aushärtungstemperatur 120 bis 150 °C, besonders bevorzugt von 130 bis 140 °C. Die Zeit zur Aushärtung der erfindungsgemäß eingesetzten Polyurethanzusammensetzung liegt innerhalb von 5 bis 60 Minuten.

### Träger

Das Trägermaterial in dem Composite-Halbzeug ist dadurch gekennzeichnet, dass die Faser förmigen Träger größtenteils aus Glas, Kohlenstoff, Kunststoffen, wie Polyamid (Aramid) oder Polyester, Naturfasern, oder mineralischen Fasermaterialien wie Basaltfasern oder keramische Fasern bestehen. Die Faser förmigen Träger liegen als textile Flächengebilde aus Vlies, Maschenware, Gewirke und Gestricke, nicht maschige Gebinde wie Gewebe, Gelege oder Geflechte, als Langfaser- oder Kurzfasermaterialien vor.

Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff- und Glasfasern, können verwendet werden. Ebenso sind Hybrid-Composite-Bauteile mit Prepregs aus unterschiedlichen faserförmigen Trägern herstellbar.
Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundverstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex^{®} und Kevlar^{®} von DuPont, oder Teijinconex^{®}, Twaron^{®} und Technora^{®} von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

### Isocanatkomponente

Als Isocyanatkomponente werden mit Blockierungsmitteln blockierte oder intern blockierte (Uretdion) Di- und Polyisocyanate eingesetzt.
Die erfindungsgemäß eingesetzten Di- und Polyisocyanate können aus beliebigen aromatischen, aliphatischen, cycloaliphatischen und/oder (cyclo)aliphatischen Di- und/oder Polyisocyanaten bestehen. Eine Auflistung möglicher Di- und Polyisocyanate sowie Reagenzien zu deren externen Blockierung finden sich in DE 102010030234.1.

Die erfindungsgemäß verwendeten Polyisocyanate sind in einer ersten Ausführungsform extern blockiert. In Frage kommen dazu externe Blockierungsmittel, wie beispielsweise in DE 102010030234.1 zu finden sind. Die bevorzugt verwendeten Härterkomponente sind IPDI-Addukte, die Isocyanurat-Gruppierungen und ε-Caprolactam blockierte Isocyanatstrukturen enthalten. Bevorzugte Blockierungsmittel sind ausgewählt aus Acetessigsäureethylester, Diisopropylamin, Methylethylketoxim, Malonsäurediethylester, ε-Caprolactam, 1,2,4-Triazol, Phenol oder substituierte Phenole und/oder 3,5-Dimethylpyrazol.

In einer zweiten, bevorzugten Ausführungsform liegen die Isocyanatkomponenten mit einer internen Blockierung vor. Die interne Blockierung erfolgt über eine Dimerbildung über Uretdion-Strukturen, die bei erhöhter Temperatur wieder in die ursprünglich vorhandenen Isocyanat-Strukturen zurückspalten und damit die Vernetzung mit dem Binder in Gang setzen.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäuretriamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Es können die oben genannten Di- und Polyisocyanate verwendet werden. Bevorzugt sind sowohl für die Ausführungsform der extern blockierten Isocyanate als auch für die Ausführungsform der Urestdione Di- und Polyisocyanate aus beliebigen aliphatischen, cycloaliphatischen und/oder (cyclo)aliphatischen Di- und/oder Polyisocyanaten. Erfindungsgemäß werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) verwendet. Ganz besonders bevorzugt werden IPDI, HDI, TMDI und H₁₂MDI eingesetzt, wobei auch die Isocyanurate einsetzbar sind.

Ganz besonders bevorzugt wird für das Matrixmaterial IPDI und HDI verwendet. Die Umsetzung dieser Uretdiongruppen enthaltenden Polyisocyanate zu Uretdiongruppen haltigen Härtern a) beinhaltet die Reaktion der freien NCO-Gruppen mit hydroxylgruppenhaltigen Monomeren oder Polymeren, wie z.B. Polyestern, Polythioethern, Polyethern, Polycaprolactamen, Polyepoxiden, Polyesteramiden, Polyurethanen oder nieder-molekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524).

Bevorzugte Uretdiongruppen aufweisende Härter a) haben einen freien NCO-Gehalt von weniger als 5 Gew% und einen Gehalt an Uretdiongruppen von 3 bis 25 Gew%, bevorzugt 6 bis 18 Gew% (berechnet als C₂N₂O₂, Molekulargewicht 84). Bevorzugt werden Polyester und monomere Dialkohole. Außer den Uretdiongruppen können die Härter auch Isocyanurat-, Biuret-, Allophanat-, Urethan- und/oder Harnstoff-Strukturen aufweisen.

Optional können die Isocyanatkomponenten zusätzliche 0,1 bis 5,0 Gew% Katalysatoren enthalten. Es handelt sich hierbei um metallorganischen Katalysatoren, wie z. B. Dibutylzinndilaurat (DBTL), Zinnoctoat, Bismuthneodecanoat, oder aber tertiäre Amine, wie z. B. 1,4-Diazabicylco[2.2.2.]octan, in Mengen von 0,001 - 1 Gew%. Diese erfindungsgemäß eingesetzten reaktiven Polyurethanzusammensetzungen werden bei normalen Bedingungen, z.B. mit DBTL-Katalyse, ab 160 °C, üblicherweise ab ca. 180 °C ausgehärtet.

Die Isocyanatkomponente liegt unterhalb von 40 °C in fester Form und oberhalb von 125 °C in flüssiger Form vor. Gegebenenfalls kann die Isocyanatkomponente weitere aus der Polyurethanchemie bekannte Hilfs- und Zusatzstoffe enthalten

In Bezug auf die Uretdion enthaltende Ausführungsform weist die Isocyanatkomponente einen freien NCO-Gehalt von kleiner 5 Gew% und einen Uretdiongehalt von 3 bis 25 Gew% auf.

Darüber hinaus kann die Isocyanatzusammensetzung dieser Ausführungsform 0,1 bis 5 Gew%, bevorzugt von 0,3 bis 2 Gew% mindestens eines Katalysators ausgewählt aus quarternären Ammoniumsalzen, bevorzugt Tetralkylammoniumsalze, und/oder quarternären Phosphoniumsalzen mit Halogenen, Hydroxiden, Alkoholaten oder organischen oder anorganischen Säureanionen als Gegenion, und 0,1 bis 5 Gew%, bevorzugt 0,3 bis 2 Gew% mindestens eines Co-Katalysators, ausgewählt aus entweder mindestens einem Epoxid und/oder mindestens einem Metallacetylacetonat und/oder quarternären Ammoniumacetylacetonat und/oder quarternären Phosphoniumacetylacetonat enthalten. Alle Mengenangaben zu den (Co-)Katalysatoren sind bezogen auf die Gesamtformulierung des Matrixmaterials.

Beispiele für die Katalysatoren finden sich in DE 102010030234.1. Diese Katalysatoren können allein oder in Mischungen zugesetzt werden. Bevorzugt werden Tetraethylammoniumbenzoat und Tetrabutylammoniumhydroxid verwendet.

Die Isocynatkomponente kann darüber hinaus zusätzlich 0,1 bis 5,0 Gew% mindestens eines Co-Katalysators enthalten.

Als Co-Katalysatoren werden einerseits Epoxide eingesetzt. In Frage kommen dabei z.B. Glycidylether und Glycidylester, aliphatische Epoxide, Diglycidylether auf Basis Bisphenol A und Glycidylmethacrylate. Beispiele für solche Epoxide sind Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen eingesetzt werden. Bevorzugt werden ARALDIT PT 910 und 912 eingesetzt.

Als Co-Katalysatoren kommen alternativ Metallacetylacetonate in Frage. Beispiele dafür sind Zinkacetylacetonat, Lithiumacetylacetonat und Zinnacetylacetonat, allein oder in Mischungen. Bevorzugt wird Zinkacetylacetonat eingesetzt.

Als Co-Katalysatoren kommen ausserdem quarternäre Ammoniumacetylacetonate oder quarternäre Phosphoniumacetylacetonate in Frage. Beispiele dafür finden sich in DE 102010030234.1. Besonders bevorzugt werden Tetraethylammoniumacetylacetonat und Tetrabutylammoniumacetylacetonat eingesetzt. Selbstverständlich können auch Mischungen solcher Katalysatoren verwendet werden.

Je nach Zusammensetzung der verwendeten reaktiven oder hochreaktiven Isocyanatkomponente und gegebenenfalls zugesetzten Katalysatoren können sowohl die Geschwindigkeit der Vernetzungsreaktion bei der Herstellung der Composite-Bauteile als auch die Eigenschaften der Matrix in weiten Bereichen variiert werden.

Gegebenenfalls kann die Isocyanatkomponente auch weitere aus der Polyurethanchemie bekannte Hilfs- und Zusatzstoffe enthalten.

### Harzkomponenten

Erfindungsgemäß werden als Harzkomponenten 2K-Reaktionsharze auf Methacrylatbasis, bestehend aus einer ersten und einer zweiten Harzkomponente, verwendet.

Die erfindungsgemäß verwendete erste Harzkomponente weist folgende Zusammensetzung auf:
- 20 Gew% bis 70 Gew%, bevorzugt 30 Gew% bis 60 Gew% und besonders bevorzugt 30 Gew% bis 40 Gew% (Meth)acrylat-Monomere, bevorzugt (Meth)acrylate und/oder mit (Meth)acrylaten copolymerisierbare Komponenten,
- 10 Gew% bis 50 Gew%, bevorzugt 15 Gew% bis 40 Gew% Präpolymere und
- 0 Gew% bis 5 Gew% Beschleuniger.
Zusätzlich können noch weitere Komponenten optional enthalten sein. Als Hilfs- und Zusatzstoffe können zusätzlich Regler, Weichmacher, Stabilisatoren und/oder Inhibitoren eingesetzt werden. Darüber hinaus können Farbstoffe, Füllstoffe, Netz-, Dispergier- und Verlaufshilfsmittel, Haftvermittler, UV-Stabilisatoren, Entschäumer und Rheologieadditive zugesetzt werden. Insbesondere kann die erste Harzkomponente folgende zusätzlichen Bestandteile enthalten:
- 0 Gew% bis 30 Gew% Vernetzer, bevorzugt ausgewählt aus der Gruppe der
   Dimethacrylate,
- 0 Gew% bis 20 Gew% Urethan(meth)acrylate.

Entscheidend für die vorliegende Erfindung ist, dass die Monomere und/oder Präpolymere aus Harzkomponente 1 funktionelle Gruppen aufweisen. Als solche funktionellen Gruppen sind Hydroxylgruppen, Aminogruppen und/oder Thiolgruppen geeignet, welche mit den freien Isocyanatgruppen, bzw. Uretdiongruppen aus der Isocyanatkomponente unter Addition reagieren und somit zusätzlich vernetzen und aushärten. Die Harzkomponente 1 weist dabei eine OH-Zahl von 10 bis 100, bevorzugt von 20 bis 500 mg, besonders bevorzugt von 20 bis 150 mg KOH/Gramm auf.
Insbesondere wird die Menge an den funktionellen Gruppen so gewählt, dass auf jede funktionelle Gruppe der Harzkomponenten 0,6 bis 2,0 Isocyanatäquivalente bzw. 0,3 bis 1,0, bevorzugt 0,45 bis 0,55 Uretdiongruppen der Isocyanatkomponente entfällt.

Die zweite Harzkomponente besteht aus einer Mischung, enthaltend ein oder mehrere Initiatoren. Bezogen auf die erste Harzkomponente handelt es sich dabei um 0,1 Gew% bis 10 Gew%, bevorzugt 0.5 Gew% bis 7 Gew% und besonders bevorzugt 1 Gew% bis 5 Gew% Initiator. In der Regel ist das Peroxid in der zweiten Harzkomponente mit einem Verdünnungsmittel, beispielsweise mit einem Phthalat wie Dibutylphthalat, einem Öl oder einem anderen Weichmacher versetzt.

Als Polymerisationsinitiatoren dienen insbesondere Peroxide oder Azoverbindungen. Unter Umständen kann es vorteilhaft sein, ein Gemisch verschiedener Initiatoren einzusetzen. Vorzugsweise finden halogenfreie Peroxide wie Permaleinate, Dilauroylperoxid, Dibenzoylperoxid, tert-Butylperoctoat, Di(tert-butyl)peroxid (DTBP), Di(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Besonders bevorzugte Initiatoren sind Dilauroylperoxid oder Dibenzoylperoxid.

Eine besondere Ausführungsform eines Redox-Starter-Systems für die Initiator enthaltende Reaktionsharzkomponente ist die Kombination aus Peroxiden und Beschleunigern, insbesondere Aminen, die in der Regel in Harzkomponente 1 enthalten sind. Als besagte Amine seien zum Beispiel tertiäre aromatisch substituierte Amine, wie insbesondere N,N-Dimethyl-p-toluidin, N,N-bis-(2-Hydroxyethyl)-p-toluidin oder N,N-bis-(2-Hydroxypropyl)-p-toluidin genannt. Das erfindungsgemäße Reaktionsharz kann bis zu 7 Gew%, bevorzugt bis zu 5 Gew% und ganz besonders bevorzugt bis zu 3 Gew% eines Beschleunigers enthalten.

In einer Alternativen Ausführungsform eines 2-K-Harzsystems, ist der Beschleuniger in der zweiten Komponente, zum Beispiel in einem Verdünnungsmittel enthalten und der Initiator, z.B. das Peroxid ist Bestandteil des erfindungsgemäßen Reaktionsharzes.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat oder 2-Ethylhexyl(meth)acrylat.

Als Bestandteile von Monomergemischen eignen sich auch zusätzliche Monomere mit einer weiteren funktionellen Gruppe, wie a,β-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.
Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole.

Ein optionaler Bestandteil des erfindungsgemäßen Reaktionsharzes sind die Vernetzer. Dabei handelt es sich insbesondere um mehrfunktionelle Methacrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat oder Trimethylolpropantri(meth)acrylat.

Im Einzelnen wird die Zusammensetzung der Monomere nach Anteil und Zusammensetzung zweckmäßigerweise im Hinblick auf die gewünschte technische Funktion und das zu benetzende Trägermaterial gewählt werden.

Der Monomeranteil des Reaktionsharzes liegt dabei zwischen 20 Gew% und 70 Gew%, bevorzugt zwischen 30 Gew% und 60 Gew% und besonders bevorzugt zwischen 30 Gew% und 40 Gew%.

Bei Harzkomponente 1 handelt es sich um sogenannte MO-PO-Systemen. Diesen enthalten neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate. Diese werden zur Verbesserung der Polymerisationseigenschaften, der mechanischen Eigenschaften, der Haftung zum Trägermaterial, der Viskositätseinstellung bei der Verarbeitung bzw. Benetzung des Trägermaterials mit dem Harz, sowie der optischen Anforderungen an die Harze eingesetzt. Der Präpolymeranteil des Reaktionsharzes liegt dabei zwischen 10 Gew% und 50 Gew%, bevorzugt zwischen 15 Gew% und 40 Gew%. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt weisen die Präpolymere Hydroxy-, Amin- oder Thiolgruppen auf.

Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.
Besagte Polyester werden in Substanz via Polykondensation oder ringöffnende Polymerisation gewonnen und setzen sich aus den für diese Anwendungen bekannten Bausteinen zusammen.

Als Regler können alle aus der radikalischen Polymerisation bekannten Verbindungen verwendet werden. Bevorzugt werden Mercaptane wie n-Dodecylmercaptan eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10 - 700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

### Weitere Bestandteile der Prepregs

Zusätzlich zu den Harzkomponenten 1 bzw. 2, der Trägermaterial und der Isocyanatkomponente können die Composite-Halbzeuge noch weitere Zusatzstoffe aufweisen. So können beispielsweise Lichtschutzmittel wie z.B. sterisch gehinderte Amine, oder andere Hilfsmittel, wie sie z. B. in EP 669 353 beschrieben wurden, in einer Gesamtmenge von 0,05 bis 5 Gew% zugesetzt werden. Füllstoffe und Pigmente wie z. B. Titandioxid können in einer Menge bis zu 30 Gew% der Gesamtzusammensetzung zugesetzt werden.
Für die Herstellung der erfindungsgemäßen reaktiven Polyurethanzusammensetzungen können darüber hinaus Zusatzstoffe wie Verlaufsmittel, z.B. Polysilicone, oder Haftvermittler, z.B. auf Acrylatbasis, zugesetzt werden.

Optional können in den erfindungsgemäßen Composite-Halbzeugen zusätzliche Katalysatoren zur zweiten Aushärtung enthalten sein. Es handelt sich hierbei um metallorganischen Katalysatoren, wie z.B. Dibutylzinndilaurat, Zinkoctoat, Bismuthneodecanoat, oder aber tertiäre Amine, wie z. B. 1,4-Diazabicylco[2.2.2.]octan, in Mengen von 0,001 - 1,0 Gew%. Diese erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet und als Variante I bezeichnet.

Reaktiv (Variante I) bedeutet im Rahmen dieser Erfindung, dass die zweite Aushärtung bei Temperaturen ab 160 °C, und zwar je nach Art des Trägers erfolgt. Die zweite Aushärtung erfolgt unter normalen Bedingungen, z.B. mit DBTL-Katalyse, ab 160 °C, üblicherweise ab ca. 180 °C. Die Zeit zur zweiten Aushärtung liegt in der Regel innerhalb von 5 bis 60 Minuten.

Gegenstand der Erfindung ist auch die Verwendung der Prepregs, insbesondere mit faserförmigen Trägern aus Glas-, Kohle- oder Aramid-Fasern.

Gegenstand der Erfindung ist auch die Verwendung der erfindungsgemäß hergestellten Prepregs, zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z.B. für Rotorblätter bei Windkraftanlagen.

Gegenstand der Erfindung sind auch die aus den erfindungsgemäß hergestellten Composite-Halbzeuge bzw. Prepregs hergestellten Formteile bzw. Composite-Bauteile, aufgebaut aus mindestens einem faserförmigen Träger und mindestens einer vernetzten Reaktivzusammensetzung, bevorzugt einer vernetzten Uretdiongruppen haltigen Reaktivzusammensetzung, enthaltend ein (Meth)acrylatharz als Matrix.

## Patentansprüche

1. Composite-Halbzeuge im Wesentlichen aufgebaut aus
A) mindestens einem Faser förmigen Träger und
B) mindestens einer reaktiven oder hochreaktiven Polymerzusammensetzung als Matrixmaterial,
wobei die Polymerzusammensetzungen im Wesentlichen Mischungen aus Hydroxy-, Amin- und/oder Thiolgruppen aufweisenden Harzkomponente 1 auf (Meth)acrylatbasis, einer Initiator oder Beschleuniger enthaltenden Harzkomponente 2 und intern blockierten und/oder mit Blockierungsmitteln blockierten Di- oder Polyisocyanat als Isocyanatkomponente enthalten, und die Harzkomponente 1
20 Gew% bis 70 Gew% (Meth)acrylat-Monomere und
1 Gew% bis 50 Gew% Präpolymere
aufweist.

2. Composite-Halbzeuge nach Anspruch 1, **dadurch gekennzeichnet, dass** das Mengenverhältnis von Harzkomponente 1 zur Isocyanatkomponente zwischen 90 zu 10 und 50 zu 50 liegt.

3. Composite-Halbzeuge gemäß mindestens einem der Ansprüche 1 oder 2, **dadurch gekennzeichnet, dass** Harzkomponente 1 mindestens zusammengesetzt ist aus
0 Gew% bis 30 Gew% Vernetzer,
30 Gew% bis 60 Gew% (Meth)acrylat-Monomere,
5 Gew% bis 40 Gew% Präpolymere,
0 Gew% bis 5 Gew% Beschleuniger und
gegebenenfalls weitere Hilfsstoffe, und dass Harzkomponente 2 bezogen auf die Mengen der Harzkomponente 1 0,5 bis 7,0 Gew% Initiator, bevorzugt ein Peroxid enthält.

4. Composite-Halbzeuge gemäß mindestens einem der Ansprüche 1 oder 2, **dadurch gekennzeichnet, dass** Harzkomponente 1 mindestens zusammengesetzt ist aus
0 Gew% bis 30 Gew% Vernetzer,
30 Gew% bis 60 Gew% (Meth)acrylat-Monomere,
0 Gew% bis 20 Gew% Urethan(meth)acrylate,
5 Gew% bis 40 Gew% Präpolymere,
0,5 Gew% bis 7,0 Gew% Initiator, bevorzugt ein Peroxid und
gegebenenfalls weitere Hilfsstoffe, und dass Harzkomponente 2 bezogen auf die Mengen der Harzkomponente 1 0,1 Gew% bis 5 Gew% Beschleuniger enthält.

5. Composite-Halbzeuge gemäß mindestens einem der Ansprüche 1 bis 4, **dadurch gekennzeichnet, dass** es sich bei dem Initiator um Dilauroylperoxid, Permaleinate und/oder Dibenzoylperoxid und bei dem Beschleuniger um ein tertiäres, aromatisch substituiertes Amin handelt.

6. Composite-Halbzeuge gemäß mindestens einem der Ansprüche 1 bis 5, **dadurch gekennzeichnet, dass** die Faser förmigen Träger größtenteils aus Glas, Kohlenstoff, Kunststoffen, wie Polyamid (Aramid) oder Polyester, Naturfasern, oder mineralischen Fasermaterialien wie Basaltfasern oder keramische Fasern bestehen.

7. Composite-Halbzeuge nach Anspruch 6, **dadurch gekennzeichnet, dass**
die Faser förmigen Träger als textile Flächengebilde aus Vlies, Maschenware, Gewirke und Gestricke, nicht maschige Gebinde wie Gewebe, Gelege oder Geflechte, als Langfaser- oder Kurzfasermaterialien vorliegen.

8. Composite-Halbzeuge gemäß mindestens einem der Ansprüche 1 bis 7, **dadurch gekennzeichnet, dass** Di- oder Polyisocyanate, ausgewählt aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), wobei auch die Isocyanurate einsetzbar sind, als Isocyanatkomponente eingesetzt werden,

9. Composite-Halbzeuge gemäß mindestens einem der Ansprüche 1 bis 8, **dadurch gekennzeichnet, dass** Di-oder Polyisocyanate mit einem externen Blockierungsmittel, ausgewählt aus Acetessigsäureethylester, Diisopropylamin, Methylethylketoxim, Malonsäurediethylester, e-Caprolactam, 1,2,4-Triazol, Phenol oder substituierte Phenole und/oder 3,5-Dimethylpyrazol, blockiert sind.

10. Composite-Halbzeuge gemäß mindestens einem der Ansprüche 1 bis 9, **dadurch gekennzeichnet, dass** die Isocyanatkomponente zusätzlich 0,1 bis 5,0 Gew% Katalysatoren enthält, bevorzugt Dibutylzinndilaurat, Zinkoctoat, Bismuthneodecanoat, und/oder tertiäre Amine, bevorzugt 1,4-Diazabicylco[2.2.2.]octan, in Mengen von 0,001 - 1 Gew%.

11. Composite-Halbzeuge gemäß mindestens einem der Ansprüche 1 bis 8, **dadurch gekennzeichnet, dass** als Isocyanatkomponente Uretdione hergestellt aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), eingesetzt werden.

12. Composite-Halbzeuge gemäß mindestens einem der Ansprüche 1 bis 8 oder 11, **dadurch gekennzeichnet, dass** die Isocyanatkomponente unterhalb von 40 °C in fester Form und oberhalb von 125 °C in flüssiger Form vorliegt, einen freien NCO-Gehalt von kleiner 5 Gew% und einen Uretdiongehalt von 3 bis 25 Gew% aufweist.

13. Composite-Halbzeuge gemäß mindestens einem der Ansprüche 1 bis 8, 11 oder 12, **dadurch gekennzeichnet, dass** die Isocynatkomponente zusätzlich 0,1 bis 5 Gew% mindestens eines Katalysators ausgewählt aus quarternären Ammoniumsalzen und/oder quarternären Phosphoniumsalzen mit Halogenen, Hydroxiden, Alkoholaten oder organischen oder anorganischen Säureanionen als Gegenion enthält.

14. Composite-Halbzeuge gemäß mindestens einem der Ansprüche 1 bis 8 oder 11 bis 13, **dadurch gekennzeichnet, dass** die Isocynatkomponente zusätzlich 0,1 bis 5 Gew% mindestens eines Co-Katalysators, ausgewählt aus entweder
mindestens einem Epoxid und/oder mindestens einem Metallacetylacetonat und/oder quarternären Ammoniumacetylacetonat und/oder quarternären Phosphoniumacetylacetonat,
und gegebenenfalls aus der Polyurethanchemie bekannte Hilfs- und Zusatzstoffe
enthält.

15. Composite-Halbzeuge gemäß mindestens einem der Ansprüche 1 bis 14, **dadurch gekennzeichnet, dass** die Harzkomponente 1 und die Isocyanatkomponente in einem solchen Verhältnis zueinander vorliegen, dass auf jede Hydroxylgruppe der Harzkomponente 1 0,3 bis 1,0, bevorzugt 0,6 bis 0,9, besonders bevorzugt 0,45 bis 0,55 Uretdiongruppen und/oder extern blockierte Isocyanatgruppen der Isocyanatomponente entfallen.

16. Verfahren zur Herstellung von Composite-Halbzeugen und deren Weiterverarbeitung zu Formteilen, **gekennzeichnet durch** folgende Verfahrensschritte
I. Herstellung einer reaktiven Zusammensetzung enthaltend die Harzkomponenten 1 und 2 gemäß einem der Ansprüche 1 oder 2 und die Isocyanatkomponente gemäß einem der Ansprüche 8 oder 9,
II. direkte Imprägnierung des Faser förmigen Träger gemäß mindestens einem der Ansprüche 6 oder 7 mit der Zusammensetzung aus I.,
III. Aushärten der Harzkomponenten,
IV. Formgebung zum späteren Formteil und
V. Aushärten der Isocyanatkomponente.

17. Verfahren gemäß Anspruch 16, **dadurch gekennzeichnet, dass** die Aushärtung der Isocyanatkomponente in Verfahrensschritt V. bei einer Temperatur zwischen 60 und 120 °C, bevorzugt bei einer Temperatur zwischen 80 und 100 °C, durchgeführt wird.

18. Verwendung der Composite-Halbzeugen gemäß mindestens einem der Ansprüche 1 bis 15, zur Herstellung von Composites im Boots- und Schiffbau, in der Luft- und Raumfahrtechnik, im Automobilbau, für Zweiräder bevorzugt Motorräder und Fahrräder, in den Bereichen Automotive, Construction, Medizintechnik, Sport, Elektro- und Elektronik-Industrie, Energieerzeugungsanlagen, wie für Rotorblätter bei Windkraftanlagen.

19. Formteile, hergestellt aus einem Composite-Halbzeug gemäß mindestens einem der Ansprüche 1 bis 15, aufgebaut aus A) mindestens einem Faser förmigen Träger und B) mindestens einer vernetzten Reaktivzusammensetzung, bevorzugt einer vernetzten Uretdiongruppen haltigen Reaktivzusammensetzung, enthaltend ein (Meth)acrylatharz als Matrix.

## Claims

1. Composite semifinished products in essence composed of
A) at least one fibrous substrate and
B) at least one reactive or highly reactive polymer composition as matrix material,
where the polymer compositions in essence comprise mixtures made of (meth)acrylate-based resin component 1 having hydroxy, amine and/or thiol groups, and of resin component 2 comprising initiator or accelerator, and of, as isocyanate component, di- or polyisocyanate which has been internally capped and/or has been capped with capping agents, and resin component 1 comprises
from 20% by weight to 70% by weight of (meth)acrylate monomers and
from 1% by weight to 50% by weight of prepolymers.

2. Composite semifinished products according to Claim 1, **characterized in that** the quantitative ratio of resin component 1 to isocyanate component is from 90:10 to 50:50.

3. Composite semifinished products according to at least one of Claims 1 and 2, **characterized in that** resin component 1 is at least composed of
from 0% by weight to 30% by weight of crosslinking agent,
from 30% by weight to 60% by weight of (meth)acrylate monomers,
from 5% by weight to 40% by weight of prepolymers,
from 0% by weight to 5% by weight of accelerator and
optionally other auxiliaries, and **in that** resin component 2 comprises, based on the amounts of resin component 1, from 0.5 to 7.0% by weight of initiator, preferably a peroxide.

4. Composite semifinished products according to at least one of Claims 1 and 2, **characterized in that** resin component 1 is at least composed of
from 0% by weight to 30% by weight of crosslinking agent,
from 30% by weight to 60% by weight of (meth)acrylate monomers,
from 0% by weight to 20% by weight of urethane (meth)acrylates,
from 5% by weight to 40% by weight of prepolymers,
from 0.5% by weight to 7.0% by weight of initiator, preferably a peroxide and
optionally other auxiliaries, and **in that** resin component 2 comprises, based on the amounts of resin component 1, from 0.1% by weight to 5% by weight of accelerator.

5. Composite semifinished products according to at least one of Claims 1 to 4, **characterized in that** the initiator comprises dilauroyl peroxide, permaleates and/or dibenzoyl peroxide and the accelerator comprises a tertiary, aromatically substituted amine.

6. Composite semifinished product according to at least one of Claims 1 to 5, **characterized in that** the fibrous substrates are mostly composed of glass, of carbon, of plastics, such as polyamide (aramid) or polyester, of natural fibres, or of mineral fibre materials such as basalt fibres or ceramic fibres.

7. Composite semifinished products according to Claim 6, **characterized in that**
the fibrous substrates take the form of textile sheets made of non-woven, or of knitted fabrics, or of non-knitted structures such as woven fabrics, laid scrims or braided fabrics, in the form of long-fibre materials or of short-fibre materials.

8. Composite semifinished products according to at least one of Claims 1 to 7, **characterized in that** they use, as isocyanate component, di- or polyisocyanates selected from isophorone diisocyanate (IPDI), hexamethylene diisocyanate (HDI), diisocyanatodicyclohexylmethane (H₁₂MDI), 2-methylpentane diisocyanate (MPDI), trimethylhexamethylene 2,2,4-diisocyanate/trimethylhexamethylene 2,4,4-diisocyanate (TMDI) and/or norbornane diisocyanate (NBDI), where it is also possible to use the isocyanurates.

9. Composite semifinished products according to at least one of Claims 1 to 8, **characterized in that** di- or polyisocyanates have been capped with an external capping agent selected from ethyl acetoacetate, diisopropylamine, methyl ethyl ketoxime, diethyl malonate, ε-caprolactam, 1,2,4-triazole, phenol or substituted phenols and/or 3,5-dimethylpyrazole.

10. Composite semifinished products according to at least one of Claims 1 to 9, **characterized in that** the isocyanate component also comprises from 0.1 to 5.0% by weight of catalysts, preferably dibutyltin dilaurate, zinc octoate, bismuth neodecanoate, and/or tertiary amines, preferably 1,4-diazabicyclo[2.2.2]octane, in amounts of from 0.001 to 1% by weight.

11. Composite semifinished products according to at least one of Claims 1 to 8, **characterized in that** they use, as isocyanate component, uretdiones produced from isophorone diisocyanate (IPDI), hexamethylene diisocyanate (HDI), diisocyanatodicyclohexylmethane (H₁₂MDI), 2-methylpentane diisocyanate (MPDI), trimethylhexamethylene 2,2,4-diisocyanate/trimethylhexamethylene 2,4,4-diisocyanate (TMDI) and/or norbornane diisocyanate (NBDI).

12. Composite semifinished products according to at least one of Claims 1 to 8 or 11, **characterized in that** the isocyanate component is solid below 40°C and liquid above 125°C, and has less than 5% by weight free NCO content and has from 3 to 25% by weight uretdione content.

13. Composite semifinished products according to at least one of Claims 1 to 8, 11 and 12, **characterized in that** the isocyanate component also comprises
from 0.1 to 5% by weight of at least one catalyst selected from quaternary ammonium salts and/or quaternary phosphonium salts having halogens, hydroxides, alcoholates or organic or inorganic acid anions as counterion.

14. Composite semifinished products according to at least one of Claims 1 to 8 and 11 to 13, **characterized in that** the isocyanate component also comprises from 0.1 to 5% by weight of at least one co-catalyst selected from either at least one epoxide and/or at least one metal acetylacetonate and/or quaternary ammonium acetylacetonate and/or quaternary phosphonium acetylacetonate,
and optionally comprises auxiliaries and additives known from polyurethane chemistry.

15. Composite semifinished products according to at least one of Claims 1 to 14, **characterized in that** resin component 1 and the isocyanate component are present in a ratio to one another such that the number of uretdione groups and/or of externally capped isocyanate groups of the isocyanate component for each hydroxy group of resin component 1 is from 0.3 to 1.0, preferably from 0.6 to 0.9, particularly preferably from 0.45 to 0.55.

16. Process for producing composite semifinished products and further processing of these to give mouldings, **characterized by** the following process steps
I. production of a reactive composition comprising resin components 1 and 2 according to either of Claims 1 and 2 and the isocyanate component according to either of Claims 8 and 9,
II. direct impregnation of the fibrous substrate according to at least one of Claims 6 and 7 with the composition from I.,
III. hardening of the resin components,
IV. shaping to give the subsequent moulding and
V. hardening of the isocyanate component.

17. Process according to Claim 16, **characterized in that** the hardening of the isocyanate component in process step V. is conducted at a temperature of from 60 to 120°C, preferably at a temperature of from 80 to 100°C.

18. Use of the composite semifinished products according to at least one of Claims 1 to 15, for producing composites in boatbuilding and shipbuilding, in aerospace technology, in automobile construction, for two-wheeled vehicles, preferably motorcycles and pedal cycles, or in the automotive, construction, medical technology, sports, or electrical/electronics-industry sectors, or in energy-generation systems, for example for rotor blades in wind-power systems.

19. Mouldings produced from a composite semifinished product according to at least one of Claims 1 to 15, composed of A) at least one fibrous substrate and B) at least one crosslinked reactive composition, preferably one crosslinked reactive composition comprising uretdione groups, comprising a (meth)acrylate resin as matrix.

## Revendications

1. Composites semi-finis, essentiellement constitués par
A) au moins un support en forme de fibres et
B) au moins une composition polymère réactive ou hautement réactive comme matériau de matrice,
les compositions polymères contenant essentiellement des mélanges de composant de résine 1 à base de (méth)acrylate, présentant des groupes hydroxy, amine et/ou thiol, un composant de résine 2 contenant un initiateur ou un accélérateur et du diisocyanate ou du polyisocyanate bloqué de manière interne et/ou bloqué par des agents de blocage comme composant isocyanate et le composant de résine 1 présentant
20% en poids à 70% en poids de monomères de (méth)acrylate et
1% en poids à 50% en poids de prépolymères.

2. Composites semi-finis selon la revendication 1, **caractérisés en ce que** le rapport des quantités de composant de résine 1 à composant isocyanate est situé entre 90:10 et 50:50.

3. Composites semi-finis selon au moins l'une quelconque des revendications 1 ou 2, **caractérisés en ce que** le composant de résine 1 est au moins constitué par
0% en poids à 30% en poids de réticulants,
30% en poids à 60% en poids de monomères de (méth)acrylate,
5% en poids à 40% en poids de prépolymères,
0% en poids à 5% en poids d'accélérateurs et
le cas échéant d'autres adjuvants, et
le composant de résine 2 contient 0,5 à 7,0% en poids d'initiateur, de préférence un peroxyde, par rapport aux quantités du composant de résine 1.

4. Composites semi-finis selon au moins l'une quelconque des revendications 1 ou 2, **caractérisés en ce que** le composant de résine 1 est au moins constitué par
0% en poids à 30% en poids de réticulants,
30% en poids à 60% en poids de monomères de (méth)acrylate,
0% en poids à 20% en poids d'uréthane(méth)acrylates,
5% en poids à 40% en poids de prépolymères,
0,5% en poids à 7,0% en poids d'initiateur, de préférence un peroxyde,
le cas échéant d'autres adjuvants, et **en ce que** le composant de résine 2 contient 0,1% en poids à 5% en poids d'accélérateurs par rapport aux quantités du composant de résine 1.

5. Composites semi-finis selon au moins l'une quelconque des revendications 1 à 4, **caractérisés en ce qu'**il s'agit, pour l'initiateur, de peroxyde de dilauroyle, de permaléinate et/ou de peroxyde de dibenzoyle et, pour l'accélérateur, d'une amine tertiaire, substituée de manière aromatique.

6. Composites semi-finis selon au moins l'une quelconque des revendications 1 à 5, **caractérisés en ce que** les supports en forme de fibres sont constitués, en grande partie, de verre, de carbone, de matériaux synthétiques tels que le polyamide (Aramide) ou le polyester, de fibres naturelles ou de matériaux de fibres minérales telles que les fibres de basalte ou les fibres céramiques.

7. Composites semi-finis selon la revendication 6, **caractérisés en ce que** le support en forme de fibres se trouve sous forme de structures planes textiles en non-tissé, en tissu maillé, en étoffe à mailles et en tricot, de conteneurs non à mailles, tels que des tissus, des nappes ou des treillis, sous forme de matériaux à fibres longues et courtes.

8. Composites semi-finis selon au moins l'une quelconque des revendications 1 à 7, **caractérisés en ce que** des diisocyanates ou des polyisocyanates, choisis parmi le diisocyanate d'isophorone (IPDI), le diisocyanate d'hexaméthylène (HDI), le diisocyanatodicyclohexylméthane (H₁₂MDI), le diisocyanate de 2-méthylpentane (MPDI), le diisocyanate de 2,2,4-triméthylhexaméthylène/diisocyanate de 2,4,4-triméthylhexaméthylène (TMDI) et/ou le diisocyanate de norbornane (NBDI), sont utilisés comme composant isocyanate, les isocyanurates étant également utilisables.

9. Composites semi-finis selon au moins l'une quelconque des revendications 1 à 8, **caractérisés en ce que** les diisocyanates ou les polyisocyanates sont bloqués par un agent de blocage externe, choisi parmi l'ester éthylique de l'acide acétoacétique, la diisopropylamine, la méthyléthylcétoxime, l'ester diéthylique de l'acide malonique, l'ε-caprolactame, le 1,2,4-triazole, le phénol ou les phénols substitués et/ou le 3,5-diméthylpyrazole.

10. Composites semi-finis selon au moins l'une quelconque des revendications 1 à 9, **caractérisés en ce que** le composant isocyanate comprend en plus 0,1 à 5,0% en poids de catalyseurs, de préférence du dilaurate de dibutylétain, de l'octoate de zinc, du néodécanoate de bismuth et/ou des amines tertiaires, de préférence du 1,4-diazabicyclo[2,2,2,]octane, en des quantités de 0,001-1% en poids.

11. Composites semi-finis selon au moins l'une quelconque des revendications 1 à 8, **caractérisés en ce qu'**on utilise, comme composant isocyanate, des uretdiones préparées à partir de diisocyanate d'isophorone (IPDI), de diisocyanate d'hexaméthylène (HDI), de diisocyanatodicyclohexylméthane (H₁₂MDI), de diisocyanate de 2-méthylpentane (MPDI), de diisocyanate de 2,2,4-triméthylhexaméthylène/diisocyanate de 2,4,4-triméthylhexaméthylène (TMDI), de diisocyanate de norbornane (NBDI).

12. Composites semi-finis selon au moins l'une quelconque des revendications 1 à 8 ou 11, **caractérisés en ce que** le composant isocyanate se trouve sous forme solide en dessous de 40°C et sous forme liquide au-dessus de 125°C, présente une teneur en NCO libre inférieure à 5% en poids et une teneur en uretdione de 3 à 25% en poids.

13. Composites semi-finis selon au moins l'une quelconque des revendications 1 à 8, 11 ou 12, **caractérisés en ce que** le composant isocyanate contient en outre 0,1 à 5% en poids d'au moins un catalyseur choisi parmi les sels d'ammonium quaternaire et/ou les sels de phosphonium quaternaire avec des halogènes, des hydroxydes, des alcoolates ou des anions acides organiques ou inorganiques comme contre-ion.

14. Composites semi-finis selon au moins l'une quelconque des revendications 1 à 8 ou 11 à 13, **caractérisés en ce que** le composant isocyanate contient en plus 0,1 à 5% en poids d'au moins un cocatalyseur, choisi soit parmi au moins un époxyde et/soit au moins un acétylacétonate métallique et/soit un acétylacétonate d'ammonium quaternaire et/soit un acétylacétonate de phosphonium quaternaire, et le cas échéant des adjuvants et des additifs connus par la chimie des polyuréthanes.

15. Composites semi-finis selon au moins l'une quelconque des revendications 1 à 14, **caractérisés en ce que** le composé de résine 1 et le composant isocyanate se trouvent dans un rapport, l'un par rapport à l'autre, tel qu'il existe, pour chaque groupe hydroxyle du composant de résine 1, 0,3 à 1,0, de préférence 0,6 à 0,9, de manière particulièrement préférée 0,45 à 0,55 groupe uretdione et/ou groupe isocyanate bloqué de manière externe du composant isocyanate.

16. Procédé pour la production de composites semi-finis et leur transformation ultérieure en pièces façonnées, **caractérisé par** les étapes de procédé suivantes
I. préparation d'une composition réactive contenant les composants de résine 1 et 2 selon l'une quelconque des revendications 1 ou 2 et le composant isocyanate selon l'une quelconque des revendications 8 ou 9,
II. imprégnation directe du support en forme de fibres selon au moins l'une quelconque des revendications 6 ou 7 par la composition de I.,
III. durcissement des composants de résine,
IV. façonnage en pièce façonnée ultérieure et
V. durcissement du composant isocyanate.

17. Procédé selon la revendication 16, **caractérisé en ce que** le durcissement du composant isocyanate dans l'étape de procédé V. est réalisé à une température entre 60 et 120°C, de préférence à une température entre 80 et 100°C.

18. Utilisation des composites semi-finis selon l'une quelconque des revendications 1 à 15, pour la préparation de composites dans la construction des bateaux et des navires, dans la technique aéronautique et astronautique, dans la construction d'automobiles, pour deux-roues, de préférence les motocyclettes et les bicyclettes, dans les domaines de l'automobile, de la construction, de la technique médicale, du sport, dans l'industrie électrique et électronique, dans les installations de production d'énergie, par exemple pour des pales de rotor dans les installations éoliennes.

19. Pièces façonnées, fabriquées à partir d'un composite semi-fini selon au moins l'une quelconque des revendications 1 à 15, constituées par A) au moins un support en forme de fibres et B) au moins une composition réactive réticulée, de préférence une composition réactive contenant des groupes uretdione réticulés, contenant une résine (méth)acrylate comme matrice.
